(19) Europäisches Patentamt

European Patent Office

Office européen des brevets

(11) **EP 4 611 241 A1**

(12) **EUROPEAN PATENT APPLICATION**

(43) Date of publication:
**03.09.2025 Bulletin 2025/36**

(21) Application number: **24160412.3**

(22) Date of filing: **29.02.2024**

(51) International Patent Classification (IPC):
**H02M 1/12** (2006.01)   **H02M 7/5387** (2007.01)
**H02J 3/01** (2006.01)

(52) Cooperative Patent Classification (CPC):
**H02M 1/12; H02J 3/01; H02M 7/53873**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB Schweiz AG
5400 Baden (CH)**

(72) Inventors:
• **TSEKOURAS, Ellis G.
Burwood 2134 (AU)**
• **AGUILERA, Ricardo P.
Kingsford 2032 (AU)**
• **GEYER, Tobias
5408 Ennetbaden (CH)**

(74) Representative: **Sykora & König Patentanwälte
PartG mbB
Maximilianstraße 2
80539 München (DE)**

(54) **METHOD AND CONTROL UNIT FOR CONTROLLING AN ELECTRICAL CONVERTER, AND CONVERTER SYSTEM**

(57)     A method for controlling an electrical converter (16) is provided. The electrical converter (16) is coupled to a DC energy source and to an electrical grid and is configured for converting a DC voltage from the DC energy source into an AC voltage and to feed the AC voltage into the electrical grid. The method comprises the steps of: receiving a grid current signal being representative for a grid current ($i_{g,abc}$) of the grid and a grid voltage signal being representative for a grid voltage ($v_{g,abc}$) of the grid; determining grid current harmonics ($\hat{i}_{g,\alpha\beta;h}$) of the grid current ($i_{g,abc}$) and grid voltage harmonics ($\hat{v}_{g,\alpha\beta;h}$) of the grid voltage ($v_{g,abc}$) from the grid voltage signal and the grid current signal; determining a pulse pattern ($u_{i,abc}^{opt}$) for driving the electrical converter (16) from the determined grid current harmonics ($\hat{i}_{g,\alpha\beta;h}$), the determined grid voltage harmonics ($\hat{v}_{g,\alpha\beta;h}$), and a given fundamental grid current setpoint ($i_{g,abc;1}^{*}$), wherein the pulse pattern ($u_{i,abc}^{opt}$) comprises switching angles ($\alpha_{i,abc}^{opt}$) for the electrical converter (16) over a next modulation period of the electrical converter (16); and applying at least the next switching angle ($\alpha_{i,abc}^{opt}$) determined from the pulse pattern to the electrical converter (16).

**Fig. 1**

# EP 4 611 241 A1

## Description

FIELD OF THE INVENTION

The invention relates to the field of high-power converter control. In particular, the invention relates to a method and a control unit for controlling an electrical converter, and to a converter system comprising the control unit and the electrical converter.

BACKGROUND OF THE INVENTION

It is already known to drive electrical converters by pulse patterns, e.g. Selective Harmonic Elimination (SHE) or Optimized Pulse Patterns (OPPs), which may be determined offline independent from an operation of the electrical converter. These pulse patterns may be stored in a lookup table and may be used for driving the electrical converter, wherein it is also known to modify these predetermined pulse patterns online when driving the electrical converter.

However, such pulse patterns for driving the electrical converter do not per se have a modulation cycle of a fixed length in time. Consequently, unlike carrier-based methods, it is impossible to distinguish from a single fixed-rate sample of the ripple current between the fundamental component and its harmonic content. Given a sinusoidal current setpoint of fundamental frequency, a linear controller governing such a pulse pattern will struggle when fed-back this sample of ripple current. The harmonics will be interpreted as tracking error, and by design, the controller will attempt to eliminate them.

As exemplified by SHE, this objective yields inferior harmonic performance. Whereas for OPPs, their objective is to minimize a broader spectrum of harmonics rather than just eliminate a select few. When linear controllers are governing OPPs, their bandwidth must be severely limited to preserve the OPP's superior harmonic performance. This restrains the controller's innate disposition towards eliminating harmonics when fed-back a sample of current with a high ripple component.

DESCRIPTION OF THE INVENTION

It is an objective of the invention to provide a method and a control unit for controlling an electrical converter, which may contribute to a high quality of an output voltage of the electrical converter, which may be compatible with several different kinds of pulse patterns, and/or which may enable to achieve a low current total harmonic distortion. Further, it is an objective of the invention to provide a converter system comprising the control unit and the electrical converter.

These objectives are achieved by the subject-matter of the independent claims. Further exemplary embodiments are evident from the dependent claims and the following description.

An aspect of the invention relates to a method for controlling an electrical converter. The electrical converter is coupled to a DC energy source and to an electrical grid. The electrical converter is configured for converting a DC voltage from the DC energy source into an AC voltage and to feed the AC voltage into the electrical grid. The method comprises the steps of: receiving a grid current signal being representative for a grid current of the grid and a grid voltage signal being representative for a grid voltage of the grid; determining grid current harmonics of the grid current and grid voltage harmonics of the grid voltage from the grid voltage signal and the grid current signal; determining a pulse pattern for driving the electrical converter from the determined grid current harmonics, the determined grid voltage harmonics, and a given fundamental grid current setpoint, wherein the pulse pattern comprises switching angles for the electrical converter over a next modulation period of the electrical converter; and applying at least the next switching angle determined from the pulse pattern to the electrical converter.

A further aspect of the invention relates to a control unit for controlling the electrical converter. The control unit comprises: a harmonic observer being electrically coupled to the electrical grid and being configured for receiving the grid current signal being representative for the grid current of the electrical grid and the grid voltage signal being representative for the grid voltage of the electrical grid and for determining grid current harmonics of the grid current and grid voltage harmonics of the grid voltage from the grid voltage signal and the grid current signal; and a harmonic controller being electrically coupled to harmonic observer and to the electrical grid, and being configured for determining the pulse pattern for driving the electrical converter from the determined grid current harmonics, the determined grid voltage harmonics, and the given fundamental grid current setpoint, wherein the pulse pattern comprises the switching angles for the electrical converter over the next modulation period of the electrical converter, and for applying at least the next switching angle determined from the pulse pattern to the electrical converter.

A further aspect of the invention relates to a converter system. The converter system comprises: the electrical converter being coupled to the DC energy source and to the electrical grid and being configured for converting the DC voltage from the DC energy source into the AC voltage and to feed the AC voltage into the electrical grid; and the control unit as described above and in the following and being coupled to the electrical converter and being configured for controlling the electrical converter in accordance with the method as described above and in the following.

**EP 4 611 241 A1**

The present invention embodies the new concept of Linear Quadratic Gaussian Selective Harmonic Control (LQG-SHC) which is presented herewith. The basic idea of the proposed method, which may be embodied as control algorithm, is the regulation of selected grid current harmonics and the rejection of their respective grid voltage harmonics. By decoupling these components, a high-bandwidth linear controller for pulse patterns is designed. In particular, individual harmonics can be extracted from a fixed-rate sample of ripple current by the method described herein by adopting a decoupled approach to system modelling. Thereby allowing a high-bandwidth linear control unit for any pulse pattern to be designed at no detriment to their intended steady-state harmonic performance. Input disturbances, such as grid voltage harmonics, are also modelled and can thus be rejected too. This innovative control method is agnostic to the pulse pattern used or the corresponding harmonic objective. Aided by its generalized formulation, it can be extended to any application using pulse patterns by simply changing the setpoints for each harmonic.

The method may be carried out by the control unit coupled to the electrical converter. The grid current signal may be received by the control unit from a current sensor coupled to the electrical grid, or "grid" only in the following. The current sensor may measure the grid current and may generate the grid current signal accordingly. The grid voltage signal may be received by the control unit from a voltage sensor coupled to the grid. The voltage sensor may measure the grid voltage and may generate the grid voltage signal accordingly. The DC energy source may be a battery system, a dc link consisting of capacitor storage elements, or a photovoltaic system, for example. The electrical converter may be an inverter, in particular a grid-connected inverter.

The control unit may comprise a processor configured for carrying out the method as described above and in the following and a memory communicatively coupled to the processor and configured for storing one or more look-up tables comprising one or more pulse patterns, with each pulse pattern comprising corresponding switching angles.

The grid current harmonics and the grid voltage harmonics may be determined by estimation. The switching angles may be translated into switching instants, wherein the switching instants may be determined by multiplying them with the angular fundamental frequency. The next modulation period may be the fundamental period, which is the inverse of the fundamental frequency, or it may be a fraction or an integer multiple of the fundamental period.

According to an embodiment, the pulse pattern is determined from the determined grid current harmonics, the determined grid voltage harmonics, and a given fundamental grid current setpoint by determining state harmonic setpoints and input harmonic setpoints from the determined grid voltage harmonics and the given fundamental grid current setpoint and by determining the pulse pattern from the determined state harmonic setpoints, the determined input harmonic setpoints and the grid current harmonics. This enables regulation of individual grid current harmonics and as such the rejection of their respective grid voltage harmonics.

According to an embodiment, the state harmonic setpoints and input harmonic setpoints are determined from the determined grid voltage harmonics and the given fundamental grid current setpoint by determining a modulation index from the determined grid voltage harmonics and the given fundamental grid current setpoint, by determining switching angles of a predetermined pulse pattern stored in a lookup-table depending on the modulation index and by determining the state harmonic setpoints and the input harmonic setpoints from the determined switching angles. This may contribute to determine the state harmonic setpoints and the input harmonic setpoints very precisely and as such to a very good, for example optimal rejection of their respective grid voltage harmonics.

According to an embodiment, the state harmonic setpoints and input harmonic setpoints are determined from the determined switching angles by determining Fourier Coefficients, from the determined switching angles, by determining an amplitude and a phase of the corresponding harmonics from the determined Fourier Coefficients, and by determining the input harmonic setpoints from the amplitude and the phase and by determining the state harmonic setpoints from the input harmonic setpoints and the grid voltage harmonics. This may contribute to determine the harmonic grid current setpoint and the harmonic input setpoint in an easy way.

According to an embodiment, the pulse pattern is determined from the determined state harmonic setpoints, the determined input harmonic setpoints and the grid current harmonics by determining input harmonic commands for the electrical converter and by determining the pulse pattern from these determined input harmonic commands. This may enable one to drive the electrical converter such that the respective grid voltage harmonics are rejected.

According to an embodiment, the pulse pattern is determined from the determined harmonic input commands by determining the switching angles of the pulse pattern from the determined harmonic input commands. This may contribute to drive the electrical converter in an easy way.

According to an embodiment, the grid voltage harmonics are determined from the grid voltage signal, the grid current signal, and the pulse pattern, and/or the grid current harmonics are determined from the grid current signal, the switching angles, and the grid voltage harmonics. This may contribute to precisely determine the grid current and grid voltage harmonics.

According to an embodiment, the grid voltage harmonics are estimated by a first Kalman filter; and/or the grid current harmonics are estimated by a second Kalman filter. The Kalman filters each may be a Steady-State Kalman Filter (SSKF). This may contribute to determine the grid voltage and current harmonics in an easy and/or effective way.

According to an embodiment, the harmonic controller comprises a harmonic setpoint generator for determining state harmonic setpoints and input harmonic setpoints from a given fundamental grid current setpoint and the determined grid voltage harmonics.

According to an embodiment, the harmonic controller comprises a Linear Quadratic Regulator (LQR) coupled to the harmonic controller and being configured for determining input harmonic commands for the electrical converter from the fundamental grid current setpoint, state harmonic setpoints and input harmonic setpoints.

According to an embodiment, the harmonic controller comprises a pulse pattern QP solver coupled to the LQR and being configured for determining the switching angles of the pulse pattern from the input harmonic commands.

According to an embodiment, the harmonic controller comprises a modulator coupled to the pulse pattern QP solver and being configured to apply the pulse pattern determined from the switching angles to the electrical converter. A quantization error of the applied switching angles may degrade any pulse pattern's harmonic performance. Therefore, it may be advantageous to sample the pulse pattern at the highest rate possible. However, this contrasts with a sample rate of an advanced digital control algorithm, such as the harmonic controller as this should be executed at the lowest acceptable rate to reduce the computational burden and hence processing power needed by hardware for implementation. This juxtaposition between reducing quantization error and computational burden can be resolved by executing the modulator independently from the harmonic controller at a much higher rate, as further described below.

According to an embodiment, the harmonic observer comprises the first Kalman filter configured for estimating the grid voltage harmonics from the grid voltage signal, the grid current signal, and the pulse pattern; and the second Kalman filter configured for estimating the grid current harmonics from the grid current signal, the switching angles, and the grid voltage harmonics.

Further aspects of the invention relate to a computer program for controlling the electrical converter, which, when being executed by the processor, e.g. of the control unit, is adapted to carry out the steps of the above method, and to a computer-readable medium, on which the computer program is stored. Both the harmonic observer and the harmonic controller may be executed as software on one or more processors, e.g. of the control unit, or may be embodied as hardware, e.g. of the control unit, or may be embodied as a corresponding hardware-software combination. The computer-readable medium may be a floppy disk, a hard disk, an USB storage device, a RAM, a ROM, an EPROM or a FLASH memory. The computer-readable medium may also be a data communication network, e.g. the Internet, which allows downloading a program code. In general, the computer-readable medium may be a non-transitory or transitory medium.

In general, it has to be understood that features of the method as described in the above and in the following may be features of the computer program, the computer-readable medium, the control unit, and the converter system as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a block diagram of a converter system according to an embodiment of the invention.

Fig. 2 shows a block diagram of a harmonic controller of the converter system according to figure 1.

Fig. 3 shows a block diagram of a harmonic observer of the converter system according to figure 1.

DETAILED DESCRIPTION OF EXEMPLARY EMBODIMENTS

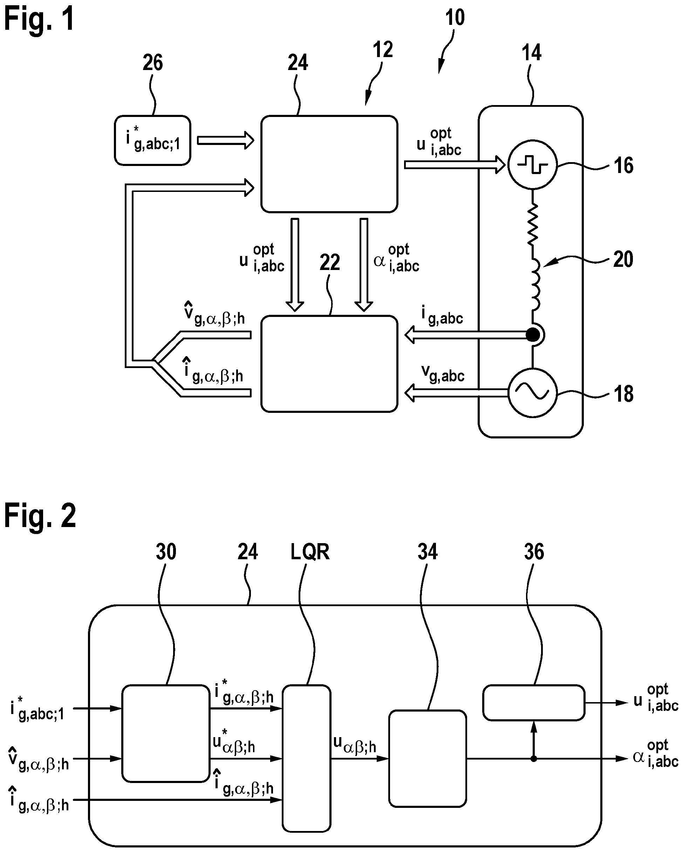

Fig. 1 shows a block diagram of a converter system 10 according to an embodiment of the invention. The converter system 10 comprises an electrical power converter system 14 and a control unit 12.

The electrical power converter system 14 comprises an electrical converter 16 that is coupled to a DC energy source (not shown). The electrical converter 16 is configured for converting a DC voltage from a DC energy source into an AC voltage and to feed the AC voltage into the electrical grid. The electrical converter 16 has an RL output impedance 20 that couples it to a AC grid voltage 18.

The electrical converter 16 may be a grid-connected three-phase converter, as they are widely known in the art. So, the system to be modelled is a grid-connected three-phase converter. The RL output impedance 20 of the converter typically represents a transformer, a filter and the grid impedance. These are lumped together to form the RL output component 20, as shown in Fig. 1.

The state, input and disturbance vectors in the *abc* frame are:

$$\boldsymbol{i}_{g,abc} = \begin{bmatrix} i_{g,a}(t) \\ i_{g,b}(t) \\ i_{g,c}(t) \end{bmatrix}, \boldsymbol{u}_{i,abc} = \begin{bmatrix} u_a(t) \\ u_b(t) \\ u_c(t) \end{bmatrix}, \boldsymbol{v}_{g,abc} = \begin{bmatrix} v_{g,a}(t) \\ v_{g,b}(t) \\ v_{g,c}(t) \end{bmatrix} \tag{1.1}$$

A three-level pulse pattern is assumed, so $\boldsymbol{u}_{i,abc} \in \{-1,0,1\}$.

The system is modelled using a decoupled approach within the stationary $\alpha\beta$ frame. This yields a distinct model for each harmonic with no cross-coupling between them:

$$\frac{d}{dt} \boldsymbol{i}_{g,\alpha\beta;1} = -\frac{R}{L} \cdot \mathbf{I}_{2x2} \cdot \boldsymbol{i}_{g,\alpha\beta;1} + \frac{1}{L} \cdot \mathbf{I}_{2x2}(\boldsymbol{v}_{i,\alpha\beta;1} - \boldsymbol{v}_{g,\alpha\beta;1})$$

$$= -\frac{R}{L} \cdot \mathbf{I}_{2x2} \cdot \boldsymbol{i}_{g,\alpha\beta;1} + \frac{V_{DC}}{2L} \cdot \mathbf{I}_{2x2} \cdot \boldsymbol{u}_{i,\alpha\beta;1} - \frac{1}{L} \cdot \mathbf{I}_{2x2} \cdot \boldsymbol{v}_{g,\alpha\beta;1}$$

$$\frac{d}{dt} \boldsymbol{i}_{g,\alpha\beta;5} = -\frac{R}{L} \cdot \mathbf{I}_{2x2} \cdot \boldsymbol{i}_{g,\alpha\beta;5} + \frac{V_{DC}}{2L} \cdot \mathbf{I}_{2x2} \cdot \boldsymbol{u}_{i,\alpha\beta;5} - \frac{1}{L} \cdot \mathbf{I}_{2x2} \cdot \boldsymbol{v}_{g,\alpha\beta;5} \tag{1.2}$$

$$\vdots$$

$$\frac{d}{dt} \boldsymbol{i}_{g,\alpha\beta;n} = -\frac{R}{L} \cdot \mathbf{I}_{2x2} \cdot \boldsymbol{i}_{g,\alpha\beta;n} + \frac{V_{DC}}{2L} \cdot \mathbf{I}_{2x2} \cdot \boldsymbol{u}_{i,\alpha\beta;n} - \frac{1}{L} \cdot \mathbf{I}_{2x2} \cdot \boldsymbol{v}_{g,\alpha\beta;n}$$

$$\forall n \in \left\{ 1, -5, 7, -11, \dots, n_{sel} = \frac{1}{2}\left(6i + [-1]^i - 3\right)(-1)^{i+1}|_{i=h_{sel}} \right\}$$

The number of positive- and negative-sequence non-triplen odd harmonics modelled within (1.2) depends on the selected harmonics $h_{sel}$. Whereas the highest order selected harmonic is $n_{sel}$. For notational brevity, $\mathbf{I}_{2\times2} = \boldsymbol{I}$ and the subscript $_h$ denotes a vector that is composed of these selected harmonics.

To discretize the system model, a zero-order hold (ZOH) is applied to (1.2):

$$\boldsymbol{x}_{\alpha\beta;h}(k+1) = \mathbf{A}\boldsymbol{x}_{\alpha\beta;h}(k) + \mathbf{B}\boldsymbol{u}_{\alpha\beta;h}(k) + \mathbf{E}\boldsymbol{v}_{\alpha\beta;h}(k)$$

$$\boldsymbol{y}_{\alpha\beta}(k) = \mathbf{C}\boldsymbol{x}_{\alpha\beta;h}(k) \tag{1.3}$$

where,

$$\mathbf{A} = e^{-\frac{T_s R}{L}} \cdot \mathbf{I}_{2hx2h} \qquad\qquad \mathbf{B} = \frac{V_{DC}}{2R}\left(1 - e^{-\frac{T_s R}{L}}\right) \cdot \mathbf{I}_{2hx2h}$$

$$\mathbf{E} = -\frac{1}{R}\left(1 - e^{-\frac{T_s R}{L}}\right) \cdot \mathbf{I}_{2hx2} \qquad\qquad \mathbf{C} = \begin{bmatrix} \boldsymbol{I} & \boldsymbol{I} & \cdots & \boldsymbol{I} \end{bmatrix} \tag{1.3a}$$

and the state, input, disturbance and output vectors are respectively,

$$\boldsymbol{x}_{\alpha\beta;h}(k) = \begin{bmatrix} \boldsymbol{i}_{g,\alpha\beta;1} \\ \boldsymbol{i}_{g,\alpha\beta;5} \\ \vdots \\ \boldsymbol{i}_{g,\alpha\beta;n_{sel}} \end{bmatrix}, \boldsymbol{u}_{\alpha\beta;h}(k) = \begin{bmatrix} \boldsymbol{u}_{i,\alpha\beta;1} \\ \boldsymbol{u}_{i,\alpha\beta;5} \\ \vdots \\ \boldsymbol{u}_{i,\alpha\beta;n_{sel}} \end{bmatrix}, \boldsymbol{v}_{\alpha\beta;h}(k) = \begin{bmatrix} \boldsymbol{v}_{g,\alpha\beta;1} \\ \boldsymbol{v}_{g,\alpha\beta;5} \\ \vdots \\ \boldsymbol{v}_{g,\alpha\beta;n_{sel}} \end{bmatrix} \tag{1.3b}$$

$$\boldsymbol{y}_{\alpha\beta}(k) = \mathbf{C}\boldsymbol{x}_{\alpha\beta;h}(k) = \boldsymbol{i}_{g,\alpha\beta;1}(k) + \boldsymbol{i}_{g,\alpha\beta;-5}(k) + \cdots + \boldsymbol{i}_{g,\alpha\beta;n_{sel}}(k)$$

In essence, this linear time-invariant (LTI) system plus input disturbance (1.3) is modelled as a sum of non-triplen odd harmonics, truncated up to $n_{sel}$. This is encapsulated in the output, $\boldsymbol{y}_{\alpha\beta}(k)$, as a sample of ripple current is decomposed into a summation of its selected harmonics, $\boldsymbol{x}_{\alpha\beta;h}(k)$. However, a Fourier Series stipulates that an infinite number of

$$i_{g,abc}(k) = T_{\alpha\beta}^{-1} \cdot y_{\alpha\beta}(k)$$

harmonics would be needed for ⟶. This infinite sum of harmonics is gracefully completed with a single pair of states by introducing the notion of residual harmonics, $h_{res}$.

The control unit 12 is configured for controlling the electrical converter 16. The control unit 12 comprises a harmonic observer 22 and a harmonic controller 24.

The harmonic observer 22 is electrically coupled to the electrical grid. The harmonic observer 22 is configured for receiving a grid current signal being representative for a grid current $i_{g,abc}$ of the electrical grid and a grid voltage signal being representative for a grid voltage $v_{g,abc}$ of the electrical grid and for determining grid current harmonics $\hat{\imath}_{g,\alpha\beta;h}$ of the grid current $i_{g,abc}$ and grid voltage harmonics $\hat{v}_{g,\alpha\beta;h}$ of the grid voltage $v_{g,abc}$ from the grid voltage signal and the grid current signal. The grid current $i_{g,abc}$ and the grid voltage $v_{g,abc}$ may be measured.

The harmonic controller 24 is electrically coupled to the harmonic observer 22 and to the electrical grid. The harmonic controller 24 is configured for determining a pulse pattern $u_{i,abc}^{opt}$ for driving the electrical converter 16 from the determined grid current harmonics $\hat{\imath}_{g,\alpha\beta;h}$, the determined grid voltage harmonics $\hat{v}_{g,\alpha\beta;h}$, and a given fundamental grid current setpoint $i_{g,abc;1}^{*}$. The pulse pattern $u_{i,abc}^{opt}$ comprises switching angles $\alpha_{i,abc}^{opt}$ for the electrical converter 16 over a next modulation period of the electrical converter 16, and for applying at least the next switching angle $\alpha_{i,abc}^{opt}$ determined from the pulse pattern $u_{i,abc}^{opt}$ to the electrical converter 14. The next modulation period may be the fundamental period, which is the inverse of the fundamental frequency, or it may be a fraction or an integer multiple of the fundamental period.

The control unit 12 may comprise a processor (not shown) configured for carrying out the method as described above and in the following and a memory (not shown) communicatively coupled to the processor and configured for storing one or more look-up tables comprising one or more of the pulse patterns $u_{i,abc}^{opt}$, with each pulse pattern $u_{i,abc}^{opt}$ comprising corresponding switching angles $\alpha_{i,abc}^{opt}$. The harmonic observer 22 and the harmonic controller 24 each may be embodied as software stored on the memory and/or carried out by the processor. Alternatively, the harmonic observer 22 and the harmonic controller 24 each may be embodied as hardware contained in the processor or being coupled to the processor. Alternatively, the harmonic observer 22 and the harmonic controller 24 each may be embodied as a corresponding software-hardware combination.

The harmonic observer decomposes the grid current $i_{g,abc}$ and the grid voltage $v_{g,abc}$ into estimations of their respective harmonics, i.e. the grid current harmonics $\hat{\imath}_{g,\alpha\beta;h}$ and the grid voltage harmonics $\hat{v}_{g,\alpha\beta;h}$. The harmonic controller 24 then optimizes Fourier Coefficients to design a pulse pattern $u_{i,abc}^{opt}$ that tracks the fundamental grid current setpoint $i_{g,abc;1}^{*}$ and selected harmonics to achieve any desired objective.

Fig. 2 shows a block diagram of a harmonic controller 24 of the converter system 10 according to figure 1. The harmonic controller 24 may have a harmonic setpoint generator 30 for determining state harmonic setpoints $i_{g,\alpha\beta;h}^{*}$ and input harmonic setpoints $u_{\alpha\beta;h}^{*}$ from a given fundamental grid current setpoint $i_{g,abc;1}^{*}$ and the determined grid voltage harmonics $\hat{v}_{g,\alpha\beta;h}$. The harmonic controller 24 may have a Linear Quadratic Regulator LQR coupled to the harmonic controller 24 and being configured for determining input harmonic commands $u_{\alpha\beta;h}$ for the electrical converter 16

from the state harmonic setpoints $i^*_{g,\alpha\beta;h}$, the input harmonic setpoints $u^*_{\alpha\beta;h}$, and the grid current harmonics $\hat{i}_{g,\alpha\beta;h}$. The harmonic controller 24 may have a pulse pattern QP solver coupled to the LQR and being configured for determining the switching angles $\alpha^{opt}_{i,abc}$ of the pulse pattern $u^{opt}_{i,abc}$ from the input harmonic commands $u_{\alpha\beta;h}$. The harmonic controller 24 may have a modulator 36 coupled to the pulse pattern QP solver 34 and being configured to apply the pulse pattern $u^{opt}_{i,abc}$ determined from the switching angles $\alpha^{opt}_{i,abc}$ to the electrical converter 14.

Given the fundamental grid current setpoint $i^*_{g,abc;1}$ and the estimates from the harmonic observer 22, the state harmonic setpoints $i^*_{g,\alpha\beta;h}$ and the input harmonic setpoints $u^*_{\alpha\beta;h}$ may be created by the harmonic setpoint generator 30. These may be fed to the LQR for harmonic-based tracking. Then, the input commands for the selected harmonics, in other words the harmonic input commands $u_{\alpha\beta;h}$, may then be optimized into the switching angles $\alpha^{opt}_{i,abc}$ by the pulse pattern QP solver 34. Its objective is to adjust a pre-computed pulse pattern to embody the Fourier Coefficients of the input harmonic commands $u_{\alpha\beta;h}$. The modulator 36 may then be executed at an accelerated rate to decouple the execution of the harmonic controller 24 and the resolution of the determined pulse pattern $u^{opt}_{i,abc}$ applied to the electrical converter 16.

Harmonic Setpoints

The concept of Linear Quadratic Gaussian Selective Harmonic Control (LQG-SHC) embodied and/or carried out by the control unit 12 is agnostic to the pulse pattern used, in particular to the pre-computed pulse pattern. Be it SHE, OPP or SHM, there is no change to its structure. Different pulse patterns are merely interpreted as different state or input setpoints for each harmonic. To reiterate, any feasible setpoint for any harmonic can be given. This generalized formulation affords LQG-SHC the potential to excel at many challenging grid-connected applications, such an active power filter or a STATCOM. For example, if a pre-computed pulse pattern is constrained to satisfy the IEEE-519 grid codes, none of these constraints need to be carried over to LQG-SHC. They are simply encapsulated in the harmonic setpoints. So long as the harmonic setpoints are tracked, all constraints of the pre-computed pulse pattern are implicitly satisfied.

In the succeeding sections, the equilibrium point of the system model (1.3) will first be derived. This is evaluated to ensure that the state harmonic setpoints $i^*_{g,\alpha\beta;h}$ and the input harmonic setpoints $u^*_{\alpha\beta;h}$ are congruent in the steady-state. Then, a step-by-step approach for generating the complete set of harmonic setpoints that leverages the pre-computed pulse patterns will be given:

Equilibrium Point

For the grid-connected inverter, as the electrical converter 16, the system setpoints are active and reactive power generation. Focusing on a grid current control loop, which is presented herewith, these system setpoints are interpreted as amplitude, $I^*_n$, and phase angle, $\phi^*_n$, setpoints per grid current harmonic in the $\alpha\beta$ frame:

$$\boldsymbol{i}_{g,\alpha\beta;n}^{*}(t) = \begin{bmatrix} i_{g,\alpha;n}^{*}(t) \\ i_{g,\beta;n}^{*}(t) \end{bmatrix} \qquad (3.1.1)$$

$$= \begin{bmatrix} I_n^{*}\cos\left(nw_1 t + \phi_n^{*}\right) \\ I_n^{*}\sin\left(nw_1 t + \phi_n^{*}\right) \end{bmatrix}$$

where the derivative of (3.1.1) is:

$$\frac{d}{dt}\boldsymbol{i}_{g,\alpha\beta;n}^{*}(t) = nw_1 \begin{bmatrix} -I_n^{*}\sin\left(nw_1 t + \phi_n^{*}\right) \\ I_n^{*}\cos\left(nw_1 t + \phi_n^{*}\right) \end{bmatrix}$$

$$= nw_1 \begin{bmatrix} 0 & -1 \\ 1 & 0 \end{bmatrix} \begin{bmatrix} i_{\alpha;n}^{*}(t) \\ i_{\beta;n}^{*}(t) \end{bmatrix} \qquad (3.1.2)$$

$$= nw_1 \cdot \boldsymbol{\Upsilon} \cdot \boldsymbol{i}_{\alpha\beta;n}^{*}(t)$$

For each of the harmonics, then the equilibrium point is found. This is an input setpoint, $\boldsymbol{u}_{\alpha\beta;n}^{*}$ that attracts the system model (1.2) to a given state setpoint, $\boldsymbol{i}_{g,\alpha\beta;n}^{*}$ :

$$\frac{d}{dt}\boldsymbol{i}_{g,\alpha\beta;n}^{*} = -\frac{R}{L}\cdot\boldsymbol{I}\cdot\boldsymbol{i}_{g,\alpha\beta;n}^{*} + \frac{V_{DC}}{2L}\cdot\boldsymbol{I}\cdot\boldsymbol{u}_{\alpha\beta;h}^{*} - \frac{1}{L}\cdot\boldsymbol{I}\cdot\boldsymbol{v}_{g,\alpha\beta;n}$$

$$\boldsymbol{u}_{\alpha\beta;n}^{*} = \frac{2}{V_{DC}}\left[\left(\frac{d}{dt}\boldsymbol{i}_{g,\alpha\beta;n}^{*}L + R\cdot\boldsymbol{I}\right)\boldsymbol{i}_{g,\alpha\beta;n}^{*} + \boldsymbol{v}_{g,\alpha\beta;n}\right] \qquad (3.1.3)$$

$$= \frac{2}{V_{DC}}\left[(nw_1 L\boldsymbol{\Upsilon} + R\cdot\boldsymbol{I})\boldsymbol{i}_{g,\alpha\beta;n}^{*}\right]$$

$$= \frac{2}{V_{DC}}\left(\boldsymbol{Z}_n \cdot \boldsymbol{i}_{g,\alpha\beta;n}^{*} + \boldsymbol{v}_{g,\alpha\beta;n}\right)$$

where,

$$\boldsymbol{Z}_n = nw_1 L\boldsymbol{\Upsilon} + R\cdot\boldsymbol{I} \qquad (3.1.3a)$$

The equilibrium point (3.1.3) can be solved to yield the input or state setpoints $\boldsymbol{u}_{\alpha\beta;n}^{*}$ , $\boldsymbol{i}_{g,\alpha\beta;n}^{*}$ . It also intrinsically accounts for the grid voltage harmonics $\hat{v}_{g,\alpha\beta;h}$ as an input disturbance. Recalling that positive- and negative-sequence harmonics rotate in opposite directions, the sign of each consecutive non-triplen odd harmonic, n, alternates (1.2).

To reject or track harmonics of any phase, half-wave symmetry must be imposed on the pre-computed pulse patterns. The switching angles of these pulse patterns are indexed by their modulation indices and then stored in a Look-Up Table (LUT). New pulse patterns can be optimized online to supersede this LUT, as explained at the end of this description. For example, if grid voltage harmonics emerge, LQG-SHC can transition to a new set of harmonic setpoints to reject these input disturbances.

Pre-computed pulse patterns of quarter- or half-wave symmetry can be stored in this LUT. As an example, a step-by-step procedure for acquiring harmonic setpoints from a QW LUT is as follows:

1. EVALUATION THE EQUILIBRIUM POINT FOR THE FUNDAMENTAL INPUT SETPOINT:

$$u^*_{\alpha\beta;1} = \frac{2}{V_{DC}} \left( Z_1 \cdot i^*_{g,\alpha\beta;1} + v_{g,\alpha\beta;1} \right) \qquad (3.1.5)$$

2. CALCULATE THE MODULATION INDEX:

$$b^*_1 = \left\| u^*_{\alpha\beta;1} \right\| \qquad (3.1.6)$$

3. EXTRACT THE SWITCHING ANGLES FROM THE LUT:

$$LUT(b^*_1) = [\alpha_1, \alpha_2, \ldots, \alpha_k]^T = \boldsymbol{\alpha}^*_k \qquad (3.1.7)$$

4. FOR EACH HARMONIC, COMPUTE THE AMPLITUDE AND PHASE OF ITS FOURIER COEFFICIENT:

$$b^*_n = \frac{4}{n\pi} \sum_{i=1}^{k} (-1)^{(i+1)} \cos(n\alpha_i) \qquad (3.1.8)$$

$$\phi^*_n = \arg\left(-jb^*_n\right)$$

5. THEN, COMPENSATE FOR THE GRID VOLTAGE HARMONICS TO YIELD NEW INPUT SETPOINTS THAT TRACK THE STATE SETPOINTS:

$$u^*_{\alpha\beta;n} = |b^*_n| \cdot \begin{bmatrix} \cos(n\theta_1 + \phi^*_n) \\ \sin(n\theta_1 + \phi^*_n) \end{bmatrix} + \widehat{v}_{g,\alpha\beta;n} \qquad (3.1.9)$$

6. FROM THE EQUILIBRIUM POINT, COMPUTE THE STATE SETPOINTS FOR EACH HARMONIC:

$$i^*_{g,\alpha\beta;n} = Z_n^{-1} \left( \frac{V_{DC}}{2} u^*_{\alpha\beta;n} - \widehat{v}_{g,\alpha\beta;n} \right) \qquad (3.1.10)$$

By formulating the harmonic setpoints from the pre-computed pulse pattern (3.1.6), they are congruent in the steady-state. However, if arbitrary harmonic setpoints were given, they could be incongruent if a corresponding pulse pattern does not exist for them. This would impose an inverse constraint on the control law, as it is not known what harmonic setpoints are feasible until it is attempted to design the corresponding pulse pattern for them. This would significantly degrade the controller's performance, as an unknown non-linearity is introduced to the controller's actuator-the pulse pattern.

Nonetheless, leveraging a LUT for LQG-SHC is a simple inclusion that ensures the harmonics setpoints and applied pulse pattern are congruent in the steady-state. Whereas for the transient, a constraint is placed on the maximum permissible deviation from this pre-computed pulse pattern, as described below.

It is important to highlight that pulse pattern LUTs typically assume that the grid voltage $v_{g,abc}$ is ideal. Consequently, this LUT is sub-optimal if the grid voltage $v_{g,abc}$ is distorted. Storing LUTs for a variety of grid voltage harmonics $\hat{v}_{g,\alpha\beta;h}$ is infeasible as its size rapidly becomes a burden. A technically feasible suggestion for optimizing harmonic performance under distorted grid voltages $v_{g,abc}$ is given further below.

Harmonic-based LQR Control

In the steady-state, we'd like the input setpoints to be applied by the control unit 12. To do so, we first redefine the state and input vectors in terms of error from their respective setpoints. They are then subtracted, removing the input disturbance term, to yield an error-space model of a LTI system:

$$x_{e,\alpha\beta;h}(k) = x_{\alpha\beta;h}(k) - x^*_{\alpha\beta;h}(k)$$

$$u_{e,\alpha\beta;h}(k) = u_{\alpha\beta;h}(k) - u^*_{\alpha\beta;h}(k)$$

$$x_{\alpha\beta;h}(k+1) = \mathbf{A}x_{\alpha\beta;h}(k) + \mathbf{B}u_{\alpha\beta;h}(k) + \mathbf{E}v_{\alpha\beta;h}(k) \qquad (3.2.1)$$

$$x^*_{\alpha\beta;h}(k+1) = \mathbf{A}x^*_{\alpha\beta;h}(k) + \mathbf{B}u^*_{\alpha\beta;h}(k) + \mathbf{E}v_{\alpha\beta;h}(k)$$

$$x_{e,\alpha\beta;h}(k+1) = \mathbf{A}x_{e,\alpha\beta;h}(k) + \mathbf{B}u_{e,\alpha\beta;h}(k)$$

For this LTI MIMO system (3.2.1), a full state feedback controller is preferred; it is the simplest topology that can regulate many states. Within this error-space form, the state-feedback control law applies the setpoint inputs as the tracking error decays:

$$u_{e,\alpha\beta;h}(k) = -\mathbf{K} \cdot x_{e,\alpha\beta;h}(k)$$

$$u_{\alpha\beta;h}(k) = -\mathbf{K}\left(x_{\alpha\beta;h}(k) - x^*_{\alpha\beta;h}(k)\right) + u^*_{\alpha\beta;h}(k)$$

$$\begin{bmatrix} u_{\alpha\beta;1}(k) \\ u_{\alpha\beta;5}(k) \\ \vdots \\ u_{\alpha\beta;n_{sel}}(k) \end{bmatrix} = \mathbf{K}\left(\begin{bmatrix} i_{g,\alpha\beta;1}(k) \\ i_{g,\alpha\beta;5}(k) \\ \vdots \\ i_{g,\alpha\beta;n_{sel}}(k) \end{bmatrix} - \begin{bmatrix} i^*_{g,\alpha\beta;1}(k) \\ i^*_{g,\alpha\beta;5}(k) \\ \vdots \\ i^*_{g,\alpha\beta;n_{sel}}(k) \end{bmatrix}\right) + \begin{bmatrix} u^*_{\alpha\beta;1}(k) \\ u^*_{\alpha\beta;5}(k) \\ \vdots \\ u^*_{\alpha\beta;n_{sel}}(k) \end{bmatrix} \qquad (3.2.2)$$

For the state feedback gain K, a Linear Quadratic Regulator (LQR) is designed by minimizing the Discrete-time Algebraic Riccati Equation (DARE):

$$J = \sum_{k=0}^{\infty} x_e^T(k)\mathbf{Q}x_e(k) + u_e^T(k)\mathbf{R}u_e(k)$$

$$(3.2.3)$$

$$\mathbf{K} = (\mathbf{B}^T\mathbf{P}\mathbf{B} + \mathbf{R})^{-1} \cdot (\mathbf{B}^T\mathbf{P}\mathbf{A})$$

A compromise between tracking error and control effort is biased by the state and input penalties, **Q** and **R,** respectively. The design of these matrices is described in the succeeding sub-sections.

The input harmonic commands $u_{a\beta;h}$ cannot be applied by the electrical converter 16. Instead, they must be transformed into the switching angles $\alpha^{opt}_{i,abc}$ by the pulse pattern QP solver 34. As described below, this designs a pulse pattern that embodies the Fourier Coefficients of $u_{\alpha\beta;h}$. Further as described below, the harmonic observer 22 may use a Steady-State Kalman Filter (SSKF) to estimate individual current harmonics. Therefore, the state vector in the control law (3.2.2) is an estimate, $x_{\alpha\beta;h} \to \hat{x}_{\alpha\beta;h}$. By combining a LQR with a SSKF, a Linear Quadratic Gaussian (LQG) controller for selectively controlling harmonics is created; hence the control algorithm is denoted as LQG-SHC.

<u>State Penalty</u>

From a tracking error perspective, changes in setpoint for the fundamental are of most importance since they will have the largest magnitude. Therefore, during transients we are less concerned about optimizing harmonic performance and are more concerned about tracking the fundamental. To encapsulate this within the state penalty, **Q,** it is designed as an identity matrix with a weighting factor, $\lambda_{f1}$, added to bias tracking of the fundamental:

$$Q = diag\left(\left[\lambda_{f1}\cdot I, I, ..., I\right]\right) \qquad (3.2.4)$$

<u>Input Penalty</u>

The electrical grid is overwhelming inductive. Therefore, there are less concerns about injecting voltage harmonics as their order increases. This is reflected in the formulation of OPPs where the Fourier Coefficients of each harmonic are weighted by the square inverse of their order.

The system model (1.3) does not embody a decreasing importance of higher order harmonics. Consequently, it is prudent to incorporate the above-mentioned knowledge within the LQR to penalise inputting lower order harmonics, as they are more apparent. To do so, the equilibrium point (3.1.3) is recalled but the resistance is neglected, since $R<<\omega L,$ and the grid voltage disturbance. Then, inspired by our LQR cost function (3.2.3), a quadratic term with a scalar penalty is created:

$$i_{g,\alpha\beta;n} = \frac{V_{DC}}{2} Z_n^{-1} u_{\alpha\beta;n}$$

$$\left(i_{g,\alpha\beta;n}\right)^T i_{g,\alpha\beta;n} = \left(u_{\alpha\beta;n}\right)^T \left(\frac{V_{DC}}{2}\right)^2 Z_n^{-1^T} Z_n^{-1} u_{\alpha\beta;n}$$

$$= \left(u_{\alpha\beta;n}\right)^T \left(\frac{V_{DC}}{2}\right)^2 \frac{1}{R^2 + (n\omega L)^2} I \cdot u_{\alpha\beta;n} \qquad (3.2.5)$$

$$\approx \left(u_{\alpha\beta;n}\right)^T \left(\frac{V_{DC}}{2}\right)^2 \frac{1}{(n\omega L)^2} I \cdot u_{\alpha\beta;n}$$

$$\approx \left(u_{\alpha\beta;n}\right)^T \left(\frac{V_{DC}}{2}\right)^2 \frac{1}{X_n^2} I \cdot u_{\alpha\beta;n}$$

Extending (3.2.5) to all harmonics modelled, an analytical input penalty with an intuitive weighting factor, $\lambda_u$, added to tune the closed-loop bandwidth is yielded:

$$\mathbf{R} = \lambda_u \left(\frac{V_{DC}}{2}\right)^2 \frac{1}{X_1^2} \cdot diag\left(\left[I, \frac{1}{5^2}I, \frac{1}{7^2}I, ..., \frac{1}{n^2}I\right]\right) \qquad (3.2.6)$$

Similar to OPPs, (3.2.6) intuitively biases input penalties towards lower order harmonics by their squared inverse.

Suggestion for advised weighting factors are given below.

Pulse Pattern OP Solver 34

Given a set of input harmonic commands $u_{a\beta;h}$ (3.2.2), the objective of the pulse pattern QP solver 34 may be to adjust a pre-computed pulse pattern (3.1.6) to minimize the quadratic difference in each harmonic's Fourier Coefficients.
Firstly, a Park Transformation may be performed on the input commands $u_{\alpha\beta;n}$ of each harmonic. This transforms a rotating vector into two scalar quantities. After a simple realignment of the axes, these scalar quantities are the harmonic's Fourier Coefficients, as detailed in the following.
Then a small-angle approximation may be applied to linearise the Fourier Coefficients of the pre-computed pulse pattern (3.1.6). This may allow the nonlinear objective function for designing the pulse patterns to be reformulated as a quadratic program for efficient solving, as detailed below. The QP's optimization variable is $\Delta\alpha$, an adjustment to the pre-computed pulse pattern's switching angles.

Fourier Coefficient Transformation

To design a pulse pattern with the desired amplitude and phase for each harmonic, the Fourier Coefficients are needed:

$$u_n(t) = a_n(nw_1 t) + b_n sin(nw_1 t)$$
$$= A_n \cos(nw_1 t - \theta_n) \qquad (3.3.1)$$

where $A_n \angle \theta_n = a_n - jb_n$.
Recalling the Control Law (3.2.2), the input command for each harmonic is given as a rotating vector, $u_{\alpha\beta;n}$. To extract the direct and quadrature scalar amplitudes of the $a\beta$ components, a Park Transform can first be applied:

$$u_{dq;n} = T_{\alpha\beta-dq} \cdot u_{\alpha\beta;n} \qquad (3.3.2)$$

where,

$$T_{\alpha\beta-dq} = \begin{bmatrix} \cos(\theta_n + \Delta\phi_n) & \sin(\theta_n + \Delta\phi_n) \\ -\sin(\theta_n + \Delta\phi_n) & \cos(\theta_n + \Delta\phi_n) \end{bmatrix}, \quad \begin{aligned} \theta_n &= \angle u_{\alpha\beta;n} \\ \Delta\phi_n &= n\theta_1 - \theta_n \end{aligned} \qquad (3.3.2a)$$

The fundamental is accelerated, $n\theta_1$, so it is in synchronism with the harmonic, $\theta_n$. Similar to a PLL, their phase displacement, $\Delta\phi_n$, is then constant.
Then, to complete the transformation into Fourier Coefficients, the quadrature component must be flipped to align it with $b_n$ from (3.3.1):

$$u_{ab;n} = \begin{bmatrix} 1 & 0 \\ 0 & -1 \end{bmatrix} u_{dq;n} \qquad (3.3.3)$$

where $u_{ab;n} = [u_{a;n}, u_{b;n}]^T = [a_n, b_n]^T$ and $u_{dq;n} = [u_{d;n}, u_{q;n}]^T$.
In summary, to extract the input command's Fourier Coefficients, $u_{ab;n}$, a Park Transformation is performed on each harmonic (3.3.2) and the quadrature component is then flipped (3.3.3).

Objective Function

Given a set of Fourier Coefficients $u_{ab;n}$, the nonlinear objective function to optimize an equivalent pulse pattern may be:

$$\min_{\alpha_{2k}} = f(\boldsymbol{\alpha}_{2k}) \sum_{n=1,5,\dots}^{n_{sel}} \frac{\left(u_{a;n} - a_n(\boldsymbol{\alpha}_{2k})\right)^2 + \left(u_{b;n} - b_n(\boldsymbol{\alpha}_{2k})\right)^2}{n^2} \qquad (3.3.4)$$

$$\text{subject to } 0 \le \alpha_1 \le \alpha_2 \le \cdots \le \alpha_{2k} \le \pi$$

where,

$$a_n(\boldsymbol{\alpha}_{2k}) = \frac{-2}{n\pi} \sum_{i=1}^{2k} (-1)^{(i+1)} \sin(n\alpha_i) \qquad (3.3.4a)$$

$$b_n(\boldsymbol{\alpha}_{2k}) = \frac{2}{n\pi} \sum_{i=1}^{2k} (-1)^{(i+1)} \cos(n\alpha_i)$$

The squared inverse of the harmonic's order may be included to bias a closer fit of lower order harmonics. Using the switching angles from the pre-computed pulse pattern (3.1.6), the nonlinear Fourier Coefficients can then be linearised by applying a small-angle approximation:

$$a_n(\Delta\boldsymbol{\alpha}) = -\frac{2}{n\pi} \sum_{i=1}^{2k} (-1)^{(i+1)} \sin(n\alpha_i^{LUT}) + n\Delta\alpha_i \cdot \cos(n\alpha_i^{LUT})$$

$$b_n(\Delta\boldsymbol{\alpha}) = \frac{2}{n\pi} \sum_{i=1}^{2k} (-1)^{(i+1)} \cos(n\alpha_i^{LUT}) - n\Delta\alpha_i \cdot \sin(n\alpha_i^{LUT}) \qquad (3.3.5)$$

For small switching angles adjustments, $\Delta\alpha$, these linearised Fourier Coefficients may be an approximation of their nonlinear equivalents,

$$a_n(\boldsymbol{\alpha}) \approx a_n(\Delta\boldsymbol{\alpha})$$
$$b_n(\boldsymbol{\alpha}) \approx b_n(\Delta\boldsymbol{\alpha}) \qquad (3.3.6)$$

Substituting the linearised Fourier Coefficients (3.3.5) into the nonlinear objective function (3.3.4) now yields a weighted least squares (WLS) objective function:

$$\underset{\Delta\alpha}{\text{minimize}} \quad \frac{1}{2} \|\boldsymbol{C} \cdot \Delta\boldsymbol{\alpha} - \boldsymbol{d}\|_{\boldsymbol{W}}^2$$

$$\text{subject to } \quad 0 \le \left(\alpha_1^{LUT} + \Delta\alpha_1\right) \le \dots \le \left(\alpha_{2k}^{LUT} + \Delta\alpha_{2k}\right) \le \pi \qquad (3.3.7)$$
$$- \Delta\alpha_{max} \le \Delta\boldsymbol{\alpha} \le \Delta\alpha_{max}$$

where

$$\Delta\boldsymbol{\alpha} = [\Delta\alpha_1, \Delta\alpha_2, \cdots, \Delta\alpha_{2k}]^T$$

Suggestions for definitions of matrices C, d and W are given at the end of this description. The first constraint may ensure that the adjusted switching angles do not overlap one another. Whereas the second constraint may introduce the parameter $\Delta\alpha_{max}$. This safeguards the accuracy of our small-angle approximation by imposing a box constraint on the maximum permissible deviation from the pre-computed pulse pattern.

Model Predictive Control (MPC) demonstrates that Quadratic Programs (QPs) have the potential to be solved rapidly in real-time. To improve the technical feasibility of implementing LQG-SHC on commercial hardware, the WLS objective function (3.3.7) may be cast to a QP:

$$\underset{\Delta\boldsymbol{\alpha}}{\text{minimize}} \quad \frac{1}{2}\Delta\boldsymbol{\alpha}^T H \Delta\boldsymbol{\alpha} + \boldsymbol{f}^T \Delta\boldsymbol{\alpha}$$

$$\text{subject to} \quad 0 \leq \left(\bar{\alpha}_1^{LUT} + \Delta\alpha_1\right) \leq ... \leq \left(\bar{\alpha}_{2k}^{LUT} + \Delta\alpha_{2k}\right) \leq \pi$$
$$-\Delta\alpha_{max} \leq \boldsymbol{\Delta\alpha} \leq \Delta\alpha_{max}$$

$$(3.3.8)$$

where $\Delta\alpha = [\Delta\alpha_1, \Delta\alpha_2, \cdots, \Delta\alpha_{2k})^T$
$H = C^T W C$
$f = C^T W d$
$\overline{\alpha}^{LUT} = \alpha^{LUT}(k) + \Delta\alpha(k- - 1)$

The previous solution $\Delta\alpha(k\text{-}1)$ may be added to the pre-computed pulse pattern $\alpha^{LUT}(k)$, thereby shifting the point of linearisation $\bar{\alpha}^{LUT}$. Since two consecutive steps of $\Delta\alpha = \Delta\alpha_{max}$ can now be made, the search space is effectively doubled. Thereby allowing larger switching angle adjustments without degrading the accuracy of our linearised Fourier Coefficients. To yield the optimal switching angles $\alpha_{i,abc}^{opt}$ for the electrical converter 14, the solution of (3.3.8) may be added to the point of linearisation:

$$\boldsymbol{\alpha}_i^{opt} = \Delta\boldsymbol{\alpha}^{opt} + \bar{\boldsymbol{\alpha}}^{LUT} \qquad (3.3.9)$$

The approach presented above is inspired by Sequential Quadratic Programming (SQP). By leveraging a pre-computed pulse pattern, the nonlinear objective function (3.3.4) can be streamlined to a QP sub-problem (3.3.8). MPC exemplifies that QPs are particularly feasible for solving in real-time. In addition, as foretold, all of the pre-computed pulse pattern's constraints are implicitly satisfied. Aside from the simple box constraint on $\Delta\alpha_{max}$, no additional constraints are needed - irrespective of the harmonic objective. This is of particular importance when grid code constraints, such as IEEE-519, are introduced. As detailed at the end of this description, this imposes quadratic constraints, making the pulse pattern's objective function increasingly difficult to optimize.

Modulator

A quantization error of the applied switching angles $\alpha_{i,abc}^{opt}$ will degrade any pulse pattern's harmonic performance. Therefore, it should be sampled at the highest rate possible. This contrasts with the sample rate of an advanced digital control algorithm, such as the Harmonic Controller. As this should be executed at the lowest acceptable rate to reduce the computational burden and hence processing power needed by hardware for implementation. This juxtaposition between reducing quantization error and computational burden can be resolved by executing the modulator 36 independently from the harmonic controller 24 at a much higher rate, as exemplarily given further below.

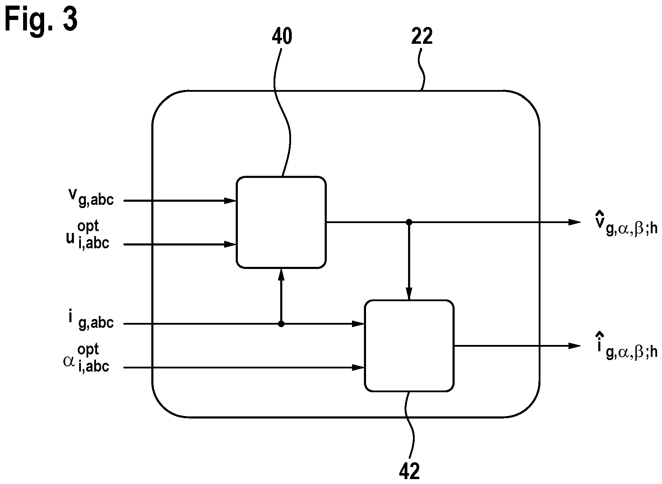

Fig. 3 shows a block diagram of the harmonic observer 22 of the converter system 10 according to figure 1. The harmonic observer 22 comprises a first Kalman filter 40 and a second Kalman filter 42. Each of the Kalman filters 40, 42 may be a Steady-State Kalman Filter (SSKF). Alternatively, the grid voltage harmonics may be determined without, in other words independent from the pulse pattern $u_{i,abc}^{opt}$. The first Kalman filter 40 may be configured for estimating the grid

voltage harmonics $\hat{v}_{g,\alpha\beta;h}$ from the grid voltage signal, the grid current signal, and the pulse pattern $u_{i,abc}^{opt}$. The second Kalman filter 42 may be configured for estimating the grid current harmonics $\hat{i}_{g,\alpha\beta;h}$ from the grid current signal, the switching angles $\alpha_{i,abc}^{opt}$, and the grid voltage harmonics $\hat{v}_{g,\alpha\beta;h}$. Preceding this, a concise background on the SSKFs 40, 42 is given and the notion of residual harmonics is introduced in the following.

Steady-State Kalman Filtering

To decompose a periodic signal into its Fourier Coefficients, a Discrete Fast Fourier Transform (DFFT) is typically used. However, this method requires large sampling windows of time-domain data and would introduce a destabilizing delay to a high-bandwidth control loop. A Sliding Discrete Fourier Transform (SDFT) uses a smaller sliding window to marginally reduce the delay. Another approach to extract the harmonics of a signal is to use resonators, however, these filters quickly become cumbersome as one must be tuned for each harmonic. LQG-SHC may use SSKFs. Compared to DFFTs, SDFTs and resonators, a SSKF can rapidly decompose a signal into estimates of many harmonics with negligible delay.

Background

A common assumption within optimal linear estimation is that modelling and measurement errors corrupt a LTI system with white gaussian process and output noise:

$$x(k+1) = \mathbf{A}x(k) + \mathbf{B}u(k) + w(k) \quad w(k)\sim\mathcal{N}\left(0, \mathbf{Q}_f\right)$$

$$y(k) = \mathbf{C}x(k) + v(k) \qquad , \qquad v(k)\sim\mathcal{N}(0, \mathbf{R}_f) \qquad (4.1.1)$$

The covariance of the process and output noise is $\mathbf{Q}_f$ and $\mathbf{R}_f$, respectively. In practice, the process covariance is difficult to quantify and is treated as a tuning parameter, whereas the output covariance can be measured directly from the output sensors.

To estimate the states of this noisy LTI system (4.1.1), a Luenberger Observer may be used:

$$\hat{x}(k+1) = \mathbf{A}\hat{x}(k) + \mathbf{B}u(k) + \mathbf{L}(y(k) - \mathbf{C}\hat{x}(k)) \qquad (4.1.2)$$

This estimation law (4.1.2) is coincidentally a combination of the prediction and update steps of a Kalman Filter. In the steady state, this recursive algorithm converges to an optimal estimation gain, L. Since the system model (4.1.1) is LTI, a SSKF can be designed offline by solving L for its steady-state value. To do so, we first recall the duality between control and estimation:

$$\textbf{Control} \rightarrow \textbf{Estimation}$$

$$\mathbf{A} \rightarrow \mathbf{A}^T$$

$$\mathbf{B} \rightarrow \mathbf{C}^T \qquad\qquad (4.1.3)$$

$$\mathbf{C} \rightarrow \mathbf{B}^T$$

We then design the covariance matrices $\mathbf{R}_f$ and $\mathbf{Q}_f$. The former is the covariance of the output sensors, this can be measured. The latter is an estimate that encapsulates any process error, such as parameter variations or unmodelled dynamics, that corrupt a system model. An intuitive perception of $\mathbf{Q}_f$ is its positively correlated to the estimation gain, **L.** As the elements of $\mathbf{Q}_f \rightarrow 0$, the SSKF is biased towards predictions from our model. Whereas when elements of $\mathbf{Q}_f \rightarrow \infty$ it instead prefers our measurements by increasing the corresponding elements of the estimation gain, **L.**

Upon performing the substitutions from (4.1.3) into the DARE, similar to an LQR, we then solve it to instead yield the optimal estimation gain:

$$\mathbf{L} = (\mathbf{APC}^T) \cdot \left(\mathbf{R}_f + \mathbf{CPC}^T\right)^{-1} \qquad\qquad (4.1.4)$$

Residual Harmonics

Recalling the concept of a Fourier Series, an infinite number of harmonics can be summated to construct any periodic signal. However, if this Fourier Series is truncated, the signal is partially reconstructed and incomplete. For a SSKF, this implies that any unmodelled harmonics will truncate the Fourier Series and manifest a perpetual output estimation error. Fortunately, there is a simple and elegant remedy to a signal's Fourier Series. The residual harmonics are those leftover when a complete signal is subtracted by its selected harmonics $h_{sel}$. An intuitive interpretation of this notion is the addition of a frequency bin state for the harmonics from $n_{sel} < n < \infty$. As will be shown for each of the SSKFs 40, 42, a single residual harmonic state can be appended to their models of selected harmonics to then yield a complete model for all harmonics.

Second SSKF 42

Input harmonics

To transform the applied pulse pattern's switching angles, $\boldsymbol{\alpha}_{i,abc}^{opt}$, into inputs for each selected harmonic, $\boldsymbol{u}_{\alpha\beta;h}$, the Fourier Coefficients are reconstructed for a HW pulse pattern:

$$a_n = -\frac{2}{n\pi}\sum_{i=1}^{2k}(-1)^{i+1}\sin(n\alpha_i) \quad b_n = \frac{2}{n\pi}\sum_{i=1}^{2k}(-1)^{i+1}\cos(n\alpha_i) \qquad (4.3.1)$$

Then, up to $n_{sel}$, each harmonic's Fourier Coefficients are transformed into rotating vectors in the $\alpha\beta$ frame:

$$\boldsymbol{u}_{\alpha\beta;n} = \sqrt{a_n + b_n}\begin{bmatrix}\cos(n\theta_1 + \phi_u)\\\sin(n\theta_1 + \phi_u)\end{bmatrix}, \begin{array}{l}\theta_1 = \angle\boldsymbol{u}_{\alpha\beta;1}\\\phi_n = \arg(a_n - jb_n)\end{array} \qquad (4.3.2)$$

This procedure is identical to the approach presented above with respect to the harmonic setpoints, except $\alpha_{i,abc}^{opt}$ is used instead of $\alpha^{LUT}$. The notion of residual harmonics is then applied to yield remaining input harmonic setpoints $\boldsymbol{u}_{\alpha\beta;h_{res}}$. This is the difference between the complete input, $u_{\alpha\beta} = T_{\alpha\beta}\cdot\boldsymbol{u}_{i,abc}$, and the selected input harmonic setpoints, $\boldsymbol{u}_{\alpha\beta;h}$, up to $n_{sel}$:

$$\boldsymbol{u}_{\alpha\beta} = \sum_{n=1,-5,7,\cdots}^{n_{sel}}\boldsymbol{u}_{\alpha\beta;n} + \sum_{n=n_{sel}+1}^{\infty}\boldsymbol{u}_{\alpha\beta;n} \qquad (4.3.3)$$

$$= \boldsymbol{u}_{\alpha\beta;h} + \boldsymbol{u}_{\alpha\beta;h_{res}}$$

$$\boldsymbol{u}_{\alpha\beta;h_{res}} = \boldsymbol{u}_{\alpha\beta} - \boldsymbol{u}_{\alpha\beta;h}$$

System Model for second SSKF 42

A state-space representation of a LTI system is needed to design a SSKF. However, the system model (1.3) includes an input disturbance, i.e. the grid voltage harmonics $\boldsymbol{v}_{g,\alpha\beta;h}$. In essence, a disturbance is just an additional input, so it can be augmented with them:

$$x_{\alpha\beta;h}(k+1) = \mathbf{A}x_{\alpha\beta;h}(k) + \mathbf{B}u_{\alpha\beta;h}(k) + \mathbf{E}v_{\alpha\beta;h}(k)$$

$$= \mathbf{A}x_{\alpha\beta;h}(k) + [\mathbf{B} \quad \mathbf{E}] \cdot \begin{bmatrix} u_{\alpha\beta;h}(k) \\ v_{\alpha\beta;h}(k) \end{bmatrix} \qquad (4.3.4)$$

$$= \mathbf{A}x_{\alpha\beta;h}(k) + \mathbf{B}_{aug}u_{aug;h}(k)$$

Then, the residual harmonics state can be appended to yield a complete system model of all grid current harmonics $\hat{i}_{g,\alpha\beta;h}$:

$$\begin{bmatrix} i_{g,\alpha\beta;h}(k+1) \\ i_{g,\alpha\beta;n_{res}}(k+1) \end{bmatrix} = \mathbf{A}I \begin{bmatrix} i_{g,\alpha\beta;h}(k) \\ i_{g,\alpha\beta;h_{res}}(k) \end{bmatrix} + \mathbf{B}_{aug}I \begin{bmatrix} u_{aug;h}(k) \\ u_{aug;h_{res}}(k) \end{bmatrix} \qquad (4.3.5)$$

$$x_{\alpha\beta}(k+1) = \mathbf{A}x_{\alpha\beta}(k) + \mathbf{B}_{aug}u_{aug}(k)$$

where the system's output is decomposed into a complete Fourier Series:

$$y_{\alpha\beta}(k) = \mathbf{C}x_{\alpha\beta;h}(k) \qquad (4.3.6)$$

$$= i_{g,\alpha\beta;1}(k) + i_{g,\alpha\beta;-5}(k) + \cdots + i_{g,\alpha\beta;n_{sel}}(k) + i_{g,\alpha\beta;h_{res}}(k)$$

Note that (4.3.6) is not truncated to $n_{sel}$, unlike (1.3b). By applying the notion of residual harmonics, a single additional pair of states, $i_{g,\alpha\beta;n_{res}}(k)$, ensures that $i_{g,abc}(k) = T_{\alpha\beta}^{-1}$ . $y_{\alpha\beta}(k)$ is always satisfied, irrespective of the selected harmonics $h_{sel}$.

Process Covariance with respect to the second SSKF 42

From a sample of grid current higher order harmonics and their ripple are increasingly attenuated. This notion may be encapsulated within the process covariance estimate by weighting the harmonics with the squared inverse of their order:

$$\mathbf{Q}_{f,i} = diag\left(q_{f,i}\left[I, \frac{1}{5^2}I, \frac{1}{7^2}, \cdots, \frac{1}{n_{sel}^2}I\right], q_{f,i,res}I\right) \qquad (4.3.7)$$

Two tuning parameters, $q_{f,i}$ and $q_{f,i;res}$, are introduced to bias the SSKF, towards predictions or measurements. As already stated above, suggestions for advised weighting factors are given below.

First SSKF 40

For state-feedback controllers, the Internal Model Principle (IMP) may be satisfied by simply negating input disturbances within the control law. Recalling (3.2.2), this may be achieved by the inclusion of input setpoints (3.1.3) that encapsulate the input disturbance. To estimate the grid voltage harmonics $\hat{v}_{g,\alpha\beta;h}$, the first SSKF 40 may be designed as a disturbance observer.

System Model for first SSKF 40

The input disturbances are modelled as an $n^{th}$ grid voltage harmonic in the $\alpha\beta$ frame:

$$\frac{d}{dt}\begin{bmatrix} v_{g,\alpha;n} \\ v_{g,\beta;n} \end{bmatrix} = \pm nw \begin{bmatrix} 0 & -1 \\ 1 & 0 \end{bmatrix} \begin{bmatrix} \cos(nwt) \\ \sin(nwt) \end{bmatrix} \tag{4.4.1}$$

$$\dot{\boldsymbol{v}}_{g,\alpha\beta;n}(t) = \pm nw\boldsymbol{J}\boldsymbol{v}_{g,\alpha\beta;n}(t)$$

The $\pm$ depends on whether the non-triplen odd harmonic is of positive- or negative-sequence, as defined in (1.2). This simple disturbance model for grid voltage harmonics can then be extrapolated to model all selected harmonics, with a residual state appended to accumulate the remaining harmonics. These many disturbance states can then be augmented with a model that has a single $\alpha\beta$ state for the grid current:

$$\frac{d}{dt}\begin{bmatrix} \boldsymbol{i}_{g,\alpha\beta} \\ \boldsymbol{v}_{g,\alpha\beta;1} \\ \vdots \\ \boldsymbol{v}_{g,\alpha\beta;n_{sel}} \\ \boldsymbol{v}_{g,\alpha\beta;n_{res}} \end{bmatrix} = \begin{bmatrix} \mathbf{A} & \mathbf{E} & \cdots & \mathbf{E} & \mathbf{E} \\ 0 & w\boldsymbol{J} & \cdots & 0 & 0 \\ \vdots & \vdots & \ddots & 0 & 0 \\ 0 & 0 & 0 & n_{sel}w\boldsymbol{J} & 0 \\ 0 & 0 & 0 & 0 & n_{res}w\boldsymbol{J} \end{bmatrix}\begin{bmatrix} \boldsymbol{i}_{g,\alpha\beta} \\ \boldsymbol{v}_{g,\alpha\beta;1} \\ \vdots \\ \boldsymbol{v}_{g,\alpha\beta;n_{sel}} \\ \boldsymbol{v}_{g,\alpha\beta;h_{res}} \end{bmatrix} + \begin{bmatrix} \mathbf{B} \\ 0 \\ \vdots \\ 0 \\ 0 \end{bmatrix}\begin{bmatrix} \boldsymbol{u}_{\alpha\beta} \\ 0 \\ \vdots \\ 0 \\ 0 \end{bmatrix}$$

$$\dot{\boldsymbol{x}}_{d,aug}(t) = \mathbf{A}_{d,aug}\,\boldsymbol{x}_{d,aug}(t) + \mathbf{B}_{d,aug}\,\boldsymbol{u}_{d,aug}(t) \tag{4.4.2}$$

$$\begin{bmatrix} \boldsymbol{i}_{g,\alpha\beta} \\ \boldsymbol{v}_{g,\alpha\beta} \end{bmatrix} = \begin{bmatrix} \boldsymbol{I} & 0 & \cdots & 0 & 0 \\ 0 & \boldsymbol{I} & \cdots & \boldsymbol{I} & \boldsymbol{I} \end{bmatrix} \boldsymbol{x}_{d,aug}(t)$$

$$\boldsymbol{y}_{d,aug}(t) = \mathbf{C}_{d,aug}\,\boldsymbol{x}_{d,aug}(t)$$

Comparing (4.4.2) to (1.3), the input disturbance is decomposed into a complete summation of its harmonics. The selection of $h_{res}$ is not important, as the process covariance can simply be adjusted so it accumulates the remaining harmonics. Note that in other possible embodiments, the grid current state in (4.4.2) can be omitted to yield a system model with no input, as mentioned above.

Process Covariance with respect to the first SSKF 40

The harmonic weights of (4.3.7) may be removed since inductive networks may not attenuate grid voltage harmonics:

$$\mathbf{Q}_{f,v} = diag\big(\boldsymbol{I}, q_{f,v}[\boldsymbol{I},\boldsymbol{I},\boldsymbol{I},\cdots,\boldsymbol{I}], q_{f,v;res}\boldsymbol{I}\big) \tag{4.4.3}$$

Similar to the second SSKF 42, two tuning parameters, $q_{f,v}$ and $q_{f,v;res}$, may be introduced to bias to the first SSKF 40 towards predictions or measurements. Advised weighting factors are given further below. The first identity matrix of (4.4.3) encapsulates the process covariance for the grid current model, by adjusting both tuning parameters, it can be biased accordingly.

Compensating Pulse Patterns for Grid Voltage Harmonics

At present, all commercially used pulse patterns are designed assuming an ideal grid voltage. Whilst naive, this assumption is fair when one considers the stochastic nature of grid voltage harmonics. It is not feasible to pre-compute pulse patterns that are compensated for grid voltage harmonics, as the possible combinations of their magnitudes and phase are seemingly infinite. Consequently, existing approaches for designing pulse patterns unfortunately exhibit zero input disturbance rejection to grid voltage harmonics.

As outlined further below, compensating pulse patterns for grid voltage harmonics has the potential to further reduce THDi and ensure robust conformance to grid codes under realistic conditions - a distorted grid voltage $v_{g,abc}$.

Generally, the magnitude and phase of grid voltage harmonics $\hat{v}_{g,\alpha\beta;h}$ evolve slowly when compared to the sample-rate of a control algorithm. This may afford the time needed to estimate and then optimize a new pulse pattern

$u_{i,abc}^{opt}$ online that is compensated for them.

Since LQG-SHC intrinsically estimates the grid voltage harmonics $\hat{v}_{g,\alpha\beta;h}$, it is well-poised to optimize and regulate the pulse patterns online $u_{i,abc}^{opt}$ to reject these input disturbances. An independent thread may perform this less time-constrained task and then feed the newly optimized pulse pattern $u_{i,abc}^{opt}$ to the LQG-SHC thread for regulating.

Selected Harmonics

A sensible upper bound on the selected harmonics $n_{sel}$ may be the number of switching angles $\alpha_{i,abc}^{opt}$ selected for the pulse pattern's quarter-cycle $k$. This may ensure that the pulse pattern QP solver 34 has a sufficient number of degrees of freedom to optimize each harmonic's Fourier Coefficients.

Courtesy of the residual harmonics $h_{sel}$, the harmonic observer 22 may always model all harmonics. Therefore, the number of harmonics selected for controlling may be independent from the accuracy of their estimations.

Weighting Factors

By adopting a controller as the Linear Quadratic Gaussian calculator LQG the tuning is intuitive and familiar for those well versed in their design. A good baseline for LQG-SHC is setting $\lambda_1 = \lambda_u = q_{f,l} = q_{f,v} = q_{f,l;res} = 1$ and $q_{f,v;res} = 100$. The process covariance for the residual grid voltage harmonic state is intentionally larger, as we'd like it to accumulate the remaining harmonics of different frequencies.

Sample Rates

To alleviate an algorithm from being encumbered by its single most complex task, the sample rates may be decoupled. This may allow the most demanding portions to be executed the slowest, whilst other simpler portions are free to execute faster. In addition, decoupling sample rates presents an exciting opportunity to parallelize an algorithm for efficient implementation.

Of the entire LQG-SHC control algorithm presented herewith, the pulse pattern QP solver may have the highest computational burden. Consequently, to permit implementation on feasible and inexpensive hardware, it may be executed at the lowest sample rate possible. Whereas other functions, such as the harmonic observer 22 and/or the modulator 36, may be simple and may be executed at higher sample rates. For example, for k = 5, good and technically feasible samples rates for the harmonic controller 22 and of the harmonic observer (optionally incl. a modulator) may be 10kHz and 100kHz, respectively. To ensure the higher order selected harmonics can be controlled and estimated, all sample rates must also satisfy Nyquist's Criterion.

Optimized Pulse Patterns for Distorted Grids with Constraints (OPP-HW-DG+C)

An objective function for optimizing new half-wave (HW) pulse patterns $u_{i,abc}^{opt}$ that are compensated for the grid voltage harmonics $\hat{v}_{g,\alpha\beta;h}$ and constrained to the limits of the grid current harmonics $\hat{l}_{g,\alpha\beta;h}$ may be:

$$\underset{\boldsymbol{\alpha}}{\text{minimize}} \quad f(\boldsymbol{\alpha}) = \sum_{n=5,7,11,\dots}^{49} \frac{\Delta a_n^2 + \Delta b_n^2}{n^2}$$

$$\text{subject to} \quad a_1 = 0, \ b_1 = m$$
$$\alpha_1 \leq \alpha_2 \leq \dots \leq \alpha_{2k} \leq \pi \qquad\qquad (A.1)$$
$$\left| \frac{I_{g;n}}{I_{g;1}^*} \right| \leq I_{g;n}^{LIM}$$

where,

$$a_{i;n} = -\frac{2}{n\pi} \sum_{i=1}^{k} (-1)^{(i+1)} \sin(n\alpha_i)$$

$$b_{i;n} = \frac{2}{n\pi} \sum_{i=1}^{2k} (-1)^{(i+1)} \cos(n\alpha_i)$$

$$\iota_{g;n} - \iota_{i;n} \ \ \iota_o(j n\omega_1)$$

$$T_o(s) = \frac{1/L}{s + R/L} \qquad\qquad (A.1a)$$

$$V_{i;n} = \frac{V_{DC}}{2} (\Delta a_n - j\Delta b_n)$$

$$\Delta a_n = a_{i;n} - a_{g;n} \ , \ \ \Delta b_n = b_{i;n} - b_{g;n}$$

Examining (A.1) and (A. 1a), $\Delta a_n$ and $\Delta b_n$ encapsulate the difference between the input and grid voltage Fourier Coefficients. Any mismatch between them is penalised by the familiar $1/n^2$ weighting since an RL output impedance 20 is assumed. Whereas the $I_{g;n}^{LIM}$ constraint limits a magnitude $I_{g;n}$ of each of the grid current harmonics $\hat{\imath}_{g,\alpha\beta;h}$, to a percentage of the fundamental load current $I_L = I_{g;1}^*$ , wherein $V_{i;n}$ is again the difference between the input and grid voltage harmonic Fourier Coefficients, as this is the voltage impressed across an output admittance $T_o(s)$.

The likelihood of finding a feasible solution to (A. 1) is primarily impacted by the number k of switching angles $\alpha_{i,abc}^{opt}$, the output filter's frequency response and how stringent the grid current harmonic limits are. Appropriate limits may be derived from IEEE-519.

So, in the steady-state, a new approach for designing pulse patterns that are robust to distorted grid voltages is proposed. Denoted OPP-HW-DG+C, it incorporates the grid voltage harmonics $\hat{v}_{g,\alpha\beta;h}$, such as those estimated by the first SSKF 40, into the objective function. This empowers the new pulse pattern $u_{i,abc}^{opt}$ with input disturbance rejection.

Linear Weighted Least Squares Matrices

The parameters for the linear weighed least squares objective function from (3.3.7) may be:

$$\Delta\boldsymbol{\alpha} = [\Delta\alpha_1, \Delta\alpha_2, \cdots, \Delta\alpha]^T$$

$$C = \begin{bmatrix} c_{1,1} & \cdots & c_{1,2n} \\ \vdots & \ddots & \vdots \\ c_{2m,1} & \cdots & c_{2m,2n} \end{bmatrix} \quad \begin{matrix} m = n_{sel} \\ n = k \end{matrix}$$

$$c_{i:(i+1),j} = -\frac{2 \cdot (-1)^{j+1}}{\pi} \begin{bmatrix} \cos(n_i \alpha_j^{LUT}) \\ \sin(n_i \alpha_j^{LUT}) \end{bmatrix}$$

$$\boldsymbol{d} = [d_1, \cdots, d_{2m}]^T$$

$$d_{i:(i+1)} = \begin{bmatrix} u_{a;i} + \frac{2}{n\pi} \sum_{j=1}^{2k} (-1)^{(j+1)} \sin(n_i \alpha_j^{LUT}) \\ u_{b;i} - \frac{2}{n\pi} \sum_{j=1}^{2k} (-1)^{(j+1)} \cos(n_i \alpha_j^{LUT}) \end{bmatrix}$$

$$\boldsymbol{W} = diag\left(1, \frac{1}{5^2}, \cdots, \frac{1}{n_{sel}^2}\right)$$

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

10 converter system
12 control unit
14 electrical power converter system
16 electrical converter
18 AC grid voltage
20 RL output impedance
22 harmonic observer
24 harmonic controller
26 external unit
30 harmonic setpoint generator
34 pulse pattern QP solver
36 modulator
40 first Kalman filter
42 second Kalman filter
LQR Linear Quadratic Regulator
$i_{g,abc}$ grid current
$v_{g,abc}$ grid voltage

$\hat{I}_{g,\alpha\beta;h}$ grid current harmonics

$\hat{v}_{g,\alpha\beta;h}$ grid voltage harmonics

$u_{i,abc}^{opt}$   pulse pattern

$\alpha_{i,abc}^{opt}$   switching angles

$i_{g,\alpha\beta;h}^{*}$   state harmonic setpoints

$u_{a\beta;h}$ input harmonic setpoints

$i_{g,abc;1}^{*}$   fundamental grid current setpoint

$b_1^{*}$   modulation index

$\alpha^{LUT}$ switching angles from a lookup-table

$u_{\alpha\beta;h}$ input harmonic commands

**Claims**

1. A method for controlling an electrical converter (16), the electrical converter (16) being coupled to a DC energy source and to an electrical grid and being configured for converting a DC voltage from the DC energy source into an AC voltage and to feed the AC voltage into the electrical grid, the method comprising the steps of:

   receiving a grid current signal being representative for a grid current ($i_{g,abc}$) of the grid and a grid voltage signal being representative for a grid voltage ($v_{g,abc}$) of the grid;
   determining grid current harmonics ($\hat{I}_{g,\alpha\beta;h}$) of the grid current ($i_{g,bc}$) and grid voltage harmonics ($\hat{v}_{g,\alpha\beta;h}$) of the grid voltage ($v_{g,abc}$) from the grid voltage signal and the grid current signal;

   determining a pulse pattern ($u_{i,abc}^{opt}$) for driving the electrical converter (16) from the determined grid current harmonics ($\hat{I}_{g,\alpha\beta;h}$), the determined grid voltage harmonics ($\hat{v}_{g,\alpha\beta;h}$), and a given fundamental grid current setpoint

   ($i_{g,abc;1}^{*}$), wherein the pulse pattern ($u_{i,abc}^{opt}$) comprises switching angles ($\alpha_{i,abc}^{opt}$) for the electrical converter (16) over a next modulation period of the electrical converter (16); and

   applying at least the next switching angle ($\alpha_{i,abc}^{opt}$) determined from the pulse pattern ($u_{i,abc}^{opt}$) to the electrical converter (16).

2. Method in accordance with claim 1, wherein

   the pulse pattern ($u_{i,abc}^{opt}$) is determined from the determined grid current harmonics ($\hat{I}_{g,\alpha\beta;h}$), the determined grid

   voltage harmonics ($\hat{v}_{g,\alpha\beta;h}$), and a given fundamental grid current setpoint ($i_{g,abc;1}^{*}$) by determining state harmonic

   setpoints ($i_{g,\alpha\beta;h}^{*}$) and input harmonic setpoints ($u_{\alpha\beta;h}^{*}$) from the determined grid voltage harmonics ($\hat{v}_{g\alpha\beta;h}$) and

   the given fundamental grid current setpoint ($i_{g,abc;1}^{*}$) and by determining the pulse pattern ($u_{i,abc}^{opt}$) from the determined state harmonic setpoints ($i_{g,\alpha\beta;h}^{*}$), the determined input harmonic setpoints ($u_{\alpha\beta;h}^{*}$) and the grid
   current harmonics ($\hat{I}_{g,\alpha\beta;h}$).

3. Method in accordance with claim 2, wherein

the state harmonic setpoints ( $i^*_{g,\alpha\beta;h}$ ) and the input harmonic setpoints ( $u^*_{\alpha\beta;h}$ ) are determined from the determined grid voltage harmonics ($\hat{v}_{g,\alpha\beta;h}$) and the given fundamental grid current setpoint ( $i^*_{g,abc;1}$ ) by determining a modulation index $b^*_1$ from the determined grid voltage harmonics ($\hat{v}_{g,\alpha\beta;h}$) and the given fundamental grid current setpoint ( $i^*_{g,abc;1}$ ), by determining switching angles $\alpha^{LUT}$ of a predetermined pulse pattern stored in a lookup-table depending on the modulation index $b^*_1$ and by determining the state harmonic setpoints ( $i^*_{g,\alpha\beta;h}$ ) and the input harmonic setpoints ( $u^*_{\alpha\beta;h}$ ) from the determined switching angles $\alpha^{LUT}$.

4. Method in accordance with claim 3, wherein

the state harmonic setpoints ( $i^*_{g,\alpha\beta;h}$ ) and the input harmonic setpoints ( $u^*_{\alpha\beta;h}$ ) are determined from the determined switching angles $\alpha^{LUT}$ by determining Fourier Coefficients $a^*_n, b^*_n$ from the determined switching angles $\alpha^{LUT}$, by determining an amplitude Un and a phase $\Phi^*_n$ of the corresponding harmonics from the determined Fourier Coefficients $a^*_n, b^*_n$, and by determining the input harmonic setpoints ( $u^*_{\alpha\beta;h}$ ) from the amplitude $U^*_n$ and the phase $\Phi^*_n$ and by determining the state harmonic setpoints ( $i^*_{g,\alpha\beta;h}$ ) from the input harmonic setpoints ( $u^*_{\alpha\beta;h}$ ) and the grid voltage harmonics ($\hat{v}_{g,\alpha\beta;h}$).

5. Method in accordance with one of claims 2 to 4, wherein

the pulse pattern ( $u^{opt}_{i,abc}$ ) is determined from the determined state harmonic setpoints ( $i^*_{g,\alpha\beta;h}$ ), the determined input harmonic setpoints ( $u^*_{\alpha\beta;h}$ ) and the grid current harmonics ($\hat{i}_{g,\alpha\beta;h}$)by determining input harmonic commands ($u_{\alpha\beta;h}$) for the electrical converter (16) and by determining the pulse pattern ( $u^{opt}_{i,abc}$ ) from the determined input harmonic commands ($u_{\alpha\beta;h}$).

6. Method in accordance with claim 5, wherein

the pulse pattern ( $u^{opt}_{i,abc}$ ) is determined from the determined input harmonic commands ($u_{\alpha\beta;h}$) by determining the switching angles ( $\alpha^{opt}_{i,abc}$ ) of the pulse pattern ( $u^{opt}_{i,abc}$ ) from the determined input harmonic commands ($u_{\alpha\beta;h}$).

7. Method in accordance with one of the preceding claims, wherein

the grid voltage harmonics ($\hat{v}_{g,\alpha\beta;h}$) are determined from the grid voltage signal, the grid current signal, and the pulse pattern ( $u^{opt}_{i,abc}$ ), and/or
the grid current harmonics ($\hat{i}_{g,\alpha\beta;h}$) are determined from the grid current signal, the switching angles (

$\alpha_{i,abc}^{opt}$ ), and the grid voltage harmonics ($\hat{v}_{g,\alpha\beta;h}$).

8. Method in accordance with claim 7, wherein

the grid voltage harmonics ($\hat{v}_{g,\alpha\beta;h}$) are estimated by a first Kalman filter (40); and/or
the grid current harmonics ($\hat{I}_{g,\alpha\beta;h}$) are estimated by a second Kalman filter (42).

9. Control unit (12) for controlling an electrical converter (16), wherein an electrical converter (16) is coupled to a DC energy source and to an electrical grid and being configured for converting a DC voltage from the DC energy source into an AC voltage and to feed the AC voltage into the electrical grid, the control unit (12) comprising:

a harmonic observer (22) being electrically coupled to the electrical grid and being configured for receiving a grid current signal being representative for a grid current ($i_{g,abc}$) of the electrical grid and a grid voltage signal being representative for a grid voltage ($v_{g,abc}$) of the electrical grid and for determining grid current harmonics ($\hat{I}_{g,\alpha\beta;h}$) of the grid current ($i_{g,abc}$) and grid voltage harmonics ($\hat{v}_{g,\alpha\beta;h}$) of the grid voltage ($v_{g,abc}$) from the grid voltage signal and the grid current signal; and
a harmonic controller (24) being electrically coupled to harmonic observer (22) and to the electrical grid, and being configured for determining a pulse pattern ( $u_{i,abc}^{opt}$ ) for driving the electrical converter (16) from the determined grid current harmonics ($\hat{I}_{g,\alpha\beta;h}$), the determined grid voltage harmonics ($\hat{v}_{g,\alpha\beta;h}$), and a given fundamental grid current setpoint ( $i_{g,abc;1}^{*}$ ), wherein the pulse pattern ( $u_{i,abc}^{opt}$ ) comprises switching angles ( $\alpha_{i,abc}^{opt}$ ) for the electrical converter (16) over a next modulation period of the electrical converter (16), and for applying at least the next switching angle ( $\alpha_{i,abc}^{opt}$ ) determined from the pulse pattern ( $u_{i,abc}^{opt}$ ) to the electrical converter (16).

10. Control unit (12) according to claim 9, wherein
the harmonic controller (24) comprises a harmonic setpoint generator (30) for determining state harmonic setpoints ( $i_{g,\alpha\beta;h}^{*}$ ) and input harmonic setpoints ( $u_{\alpha\beta;h}^{*}$ ) from a given fundamental grid current setpoint ( $i_{g,abc;1}^{*}$ ) and determined grid voltage harmonics ($\hat{v}_{g,\alpha\beta;h}$).

11. Control unit (12) according to claim 9, wherein
the harmonic controller (24) comprises a Linear Quadratic Regulator (LQR) coupled to the harmonic controller (24) and being configured for determining input harmonic commands ($u_{\alpha\beta;h}$) for the electrical converter (16) from the state harmonic setpoints ( $i_{g,\alpha\beta;h}^{*}$ ), the input harmonic setpoints ( $u_{\alpha\beta;h}^{*}$ ), and the grid current harmonics ($\hat{I}_{g,\alpha\beta;h}$).

12. Control unit (12) according to claim 11, wherein
the harmonic controller (24) comprises a pulse pattern QP solver (34) coupled to the Linear Quadratic Gaussian Regulator (LQR) and being configured for determining the switching angles ( $\alpha_{i,abc}^{opt}$ ) of the pulse pattern ( $u_{i,abc}^{opt}$ ) from the input harmonic commands ($u_{\alpha\beta;h}$).

13. Control unit (12) according to claim 12, wherein
the harmonic controller (24) comprises a modulator (36) coupled to the pulse pattern QP solver (34) and being configured to apply the pulse pattern ( $u_{i,abc}^{opt}$ ) determined from the switching angles ( $\alpha_{i,abc}^{opt}$ ) to the electrical converter (16).

14. Control unit (12) according to one of claims 9 to 13, wherein the harmonic observer (22) comprises:

a first Kalman filter (40) configured for estimating the grid voltage harmonics ($\hat{v}_{g,\alpha\beta;h}$) from the grid voltage signal, the grid current signal, and the pulse pattern ( $u_{i,abc}^{opt}$ ); and/or

a second Kalman filter (42) configured for estimating the grid current harmonics ($\hat{I}_{g,\alpha\beta;h}$) from the grid current signal, the switching angles ( $\alpha_{i,abc}^{opt}$ ), and the grid voltage harmonics ($\hat{v}_{g,\alpha\beta;h}$).

15. A converter system (10), comprising:

an electrical converter (16) being coupled to a DC energy source and to an electrical grid and being configured for converting a DC voltage from the DC energy source into an AC voltage and to feed the AC voltage into the electrical grid; and

a control unit (12) according to one of claims 9 to 14 being coupled to the electrical converter (16) and being configured for controlling the electrical converter (16) in accordance with the method according to claims 1 to 8.

## Fig. 1

## Fig. 2

# Fig. 3

Europäisches
Patentamt

European
Patent Office

Office européen
des brevets

# EUROPEAN SEARCH REPORT

**Application Number**

EP 24 16 0412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN THANH HAI ET AL: "Grid integration improvement for single-phase inverters of small wind turbines under distorted voltage conditions", INTERNATIONAL JOURNAL OF ELECTRICAL POWER & ENERGY SYSTEMS, JORDAN HILL, OXFORD, GB, vol. 87, 14 November 2016 (2016-11-14), pages 144-153, XP029868528, ISSN: 0142-0615, DOI: 10.1016/J.IJEPES.2016.11.003 * page 148; figure 7 * | 1-15 | INV. H02M1/12 H02M7/5387 H02J3/01 |
| A | JORG MEILI ET AL: "Optimized Pulse Patterns for the 5-Level ANPC Converter for High Speed High Power Applications", IEEE INDUSTRIAL ELECTRONICS, IECON 2006 - 32ND ANNUAL CONFERENCE ON, IEEE, PISCATAWAY, NJ, USA, 1 November 2006 (2006-11-01), pages 2587-2592, XP031077188, ISBN: 978-1-4244-0135-2 * Introduction; page 2587 * | 1-15 | |
| | | | **TECHNICAL FIELDS SEARCHED (IPC)** H02M H02J |
| A | MARIETHOZ S ET AL: "A new optimal PWM strategy applied to single phase inverters with variable DC voltage", ENERGY CONVERSION CONGRESS AND EXPOSITION (ECCE), 2010 IEEE, IEEE, PISCATAWAY, NJ, USA, 12 September 2010 (2010-09-12), pages 1347-1354, XP031787478, ISBN: 978-1-4244-5286-6 * Introduction; page 1347 * | 1-15 | |

-/--

The present search report has been drawn up for all claims

| Place of search | Date of completion of the search | Examiner |
|---|---|---|
| The Hague | 30 July 2024 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 16 0412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAO HUI ET AL: "A Real-Time Selective Harmonic Elimination Based on a Transient-Free Inner Closed-Loop Control for Cascaded Multilevel Inverters", IEEE TRANSACTIONS ON POWER ELECTRONICS, INSTITUTE OF ELECTRICAL AND ELECTRONICS ENGINEERS, USA, vol. 31, no. 2, 1 February 2016 (2016-02-01), pages 1000-1014, XP011670447, ISSN: 0885-8993, DOI: 10.1109/TPEL.2015.2413898 [retrieved on 2015-09-29] * Introduction; page 1000 * | 1-15 | |
| A | LI PO ET AL: "Instantaneous harmonic detection based on composite observer for distort grid with DC bias and variable frequency", INTERNATIONAL JOURNAL OF ELECTRICAL POWER & ENERGY SYSTEMS, JORDAN HILL, OXFORD, GB, vol. 138, 20 January 2022 (2022-01-20), XP086955376, ISSN: 0142-0615, DOI: 10.1016/J.IJEPES.2021.107932 [retrieved on 2022-01-20] * Introduction; page 1 * | 1-15 | TECHNICAL FIELDS SEARCHED (IPC) |

-/--

The present search report has been drawn up for all claims

| Place of search | Date of completion of the search | Examiner |
|---|---|---|
| The Hague | 30 July 2024 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 16 0412

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Quevedo Daniel E.: "Predictive Control in Power Electronics and Drives: Basic Concepts, Theory, and Methods" In: "Advanced and Intelligent Control in Power Electronics and Drives", 31 December 2014 (2014-12-31), SpringerLink, XP055816338, ISBN: 978-3-319-03401-0 pages 181-226, DOI: 10.1007/978-3-319-03401-0, Retrieved from the Internet: URL:https://www.researchgate.net/publication/260360703_Predictive_Control_in_Power_Electronics_and_Drives_Basic_Concepts_Theory_and_Methods/link/541394080cf2788c4b359aab/download> * section 4.1; page 197 - page 199 * ----- | 1-15 | |
| A | RAHMAN MD ARIFUR ET AL: "Optimal Design of Integral Linear Quadratic Gaussian Controller for Controlling of Islanded Microgrid Voltage", 2018 INTERNATIONAL CONFERENCE ON ADVANCEMENT IN ELECTRICAL AND ELECTRONIC ENGINEERING (ICAEEE), IEEE, 22 November 2018 (2018-11-22), pages 1-4, XP033518714, DOI: 10.1109/ICAEEE.2018.8642977 [retrieved on 2019-02-14] * page 2 * ----- | 1-15 | **TECHNICAL FIELDS SEARCHED (IPC)** |

The present search report has been drawn up for all claims

| Place of search | Date of completion of the search | Examiner |
|---|---|---|
| The Hague | 30 July 2024 | Zeljkovic, Sandra |

EPO FORM 1503 03.82 (P04C01)